# EUROPEAN PATENT APPLICATION

(11) **EP 4 509 976 A1**
(43) Date of publication of application: **19.02.2025**
(21) Application number: 23787510.9
(22) Date of filing: 29.03.2023
(51) Int. Cl.: G06F 3/14, G06F 3/147

(54) **METHOD AND DEVICE FOR GENERATING CALLING TOPOLOGICAL GRAPH**

(30) Priority: 14.04.2022 CN 202210391960
(71) Applicant: BEIJING BYTEDANCE NETWORK TECHNOLOGY CO., LTD., Beijing 100041 (CN)
(72) Inventor: GU, Yifan, Beijing 100028 (CN); JIA, Ning, Beijing 100028 (CN)
(74) Representative: Dentons UK and Middle East LLP
(86) International application number: PCT/CN2023/084616
(87) International publication number: WO 2023/197864

(57) **Abstract**

The present disclosure provides a method and device for generating a calling topological graph. An attribute information storage queue can be generated for each attribute information dimension of tracing information of a microservice, the attribute information is screened when a topological graph generation instruction is received, and then a calling topological graph is generated by utilizing the calling tracing information corresponding to the screened target attribute information, so that the dynamic screening of the topological graph is realized, the calling topological graph meeting the user requirements is generated, and the availability of the topological graph is improved.

## Description

The present disclosure claims the priority from the CN patent application No. 202210391960.X filed with the China National Intellectual Property Administration on April 14, 2022, the disclosure of which is incorporated herein by reference in its entirety.

### FIELD

Embodiments of the present disclosure generally relate to the field of computers, and more specifically, to a method and an apparatus for generating a call topology.

### BACKGROUND

With the evolution of the application architecture from the concentrated type to the distributed type, the applications are more independent than ever before, which may be implemented in different languages. Since there probably occur calls across data centers and the calling relationships between services are increasingly complicated, the topology has become indispensable technical means for microservice management. Through techniques of link tracing, topology generation and visualization, service failure points can be found and positioned quickly and intuitively.

A call topology is typically generated by splicing call relationships between every two services, omitting link data and detail data. Once generated, the call topology cannot be adjusted (e.g. filtered, pruned, and the like) according to the users' needs, resulting in its low availability.

### SUMMARY

Embodiments of the present disclosure at least provide a method and an apparatus for generating a call topology.

In a first aspect, the embodiments of the present disclosure provide a method of generating a call topology, comprising: obtaining call trace information respectively corresponding to a plurality of microservice calls, the call trace information comprising identification information of call chains to which the microservice calls belong, position information of each microservice call in a corresponding call chain and attribute information of the microservice calls in a plurality of dimensions; for attribute information in each dimension, generating, based on the identification information corresponding to respective attribute information in the dimension and the position information, an attribute information storage queue corresponding to the dimension; in response to a topology generation instruction, filtering, based on a filtering dimension and a filtering range of attribute information in the filtering dimension that are indicated by the topology generation instruction, target attribute information in the filtering dimension from attribute information storage queues of respective dimensions; and generating, based on call tracking information corresponding to the filtered target attribute information, a call topology corresponding to the topology generation instruction.

In an alternative implementation, for the attribute information in each dimension, generating the attribute information storage queue corresponding to the dimension based on the identification information corresponding to the respective attribute information in the dimension and the position information, comprises: for each call chain indicated by the identification information, determining, based on the position information of the microservice calls in the call chain, a microservice call order corresponding to the call chain; sorting, based on the microservice call order, the attribute information of respective dimensions corresponding to the call chain, and generating, based on a sorting result, attribute information vectors of the respective dimensions; and for an attribute information vector of each dimension, generating, based on an order of the plurality of call chains and the attribute information vector corresponding to the dimension, an attribute information storage queue corresponding to the dimension.

In an altemative implementation, generating, based on the order of the plurality of the call chains and the attribute information vector corresponding to the dimension, the attribute information storage queue corresponding to the dimension comprises: sorting, based on the order of the plurality of call chains, the attribute information vectors corresponding to the dimension; and storing, based on a column storage data structure and a sorting result, the attribute information vectors corresponding to the dimension to obtain an attribute information storage queue corresponding to the dimension.

In an altemative implementation, filtering, based on the filtering dimension indicated by the topology generation instruction and the filtering range of attribute information in the filtering dimension, the target attribute information in the filtering dimension from the attribute information storage queues of the respective dimensions comprises: filtering, based on the filtering dimension, a target storage queue from the attribute information storage queues; and traversing respective attribute information vectors in the target storage queue to search the attribute information vectors for attribute information meeting the filtering range of attribute information and use the filtered attribute information as the target attribute information.

In an altemative implementation, filtering, based on the filtering dimension indicated by the topology generation instruction and the filtering range of attribute information in the filtering dimension, the target attribute information in the filtering dimension from the attribute information storage queues of the respective dimensions comprises: filtering, based on the filtering dimension, a target storage queue from the attribute information storage queues; and traversing the target storage queue to search the target storage queue for attribute information meeting the filtering range of attribute information and use the filtered attribute information as the target attribute information.

In an altemative implementation, generating the call topology corresponding to the topology generation instruction based on the call trace information corresponding to the filtered target attribute information comprises: determining, based on the call trace information corresponding to the filtered target attribute information, a target call chain corresponding to the target attribute information; and generating, based on microservice calls corresponding to the target call chain, the call topology corresponding to the topology generation instruction.

In an alternative implementation, the dimension of the attribute information comprises at least one of: a call starting time, a call ending time, a call duration and call return information.

In a second aspect, the embodiments of the present disclosure further provide an apparatus for generating a call topology, comprising: an obtaining module for obtaining call trace information respectively corresponding to a plurality of microservice calls, the call trace information comprising identification information of call chains to which the microservice calls belong, position information of each microservice call in a corresponding call chain and attribute information of the microservice calls in a plurality of dimensions; a first generation module for generating, for attribute information in each dimension and based on the identification information corresponding to respective attribute information in the dimension and the position information, an attribute information storage queue corresponding to the dimension; a filtering module for, in response to a topology generation instruction, filtering, based on a filtering dimension and a filtering range of attribute information in the filtering dimension that are indicated by the topology generation instruction, target attribute information in the filtering dimension from attribute information storage queues of respective dimensions; and a second generation module for generating, based on call trace information corresponding to the filtered target attribute information, a call topology corresponding to the topology generation instruction.

In an altemative implementation, when generating, for the attribute information in each dimension, the attribute information storage queue corresponding to the dimension based on the identification information corresponding to the respective attribute information in the dimension and the position information, the first generation module is configured to: for each call chain indicated by the identification information, determine, based on the position information of the microservice calls in the call chain, a microservice call order corresponding to the call chain; sort the attribute information of respective dimensions corresponding to the call chain based on the microservice call order, and generating attribute information vectors of the respective dimensions based on a sorting result; and for an attribute information vector of each dimension, generate an attribute information storage queue corresponding to the dimension based on an order of the plurality of call chains and the attribute information vector corresponding to the dimension.

In an alternative implementation, when generating the attribute information storage queue corresponding to the dimension based on the order of the plurality of the call chains and the attribute information vector corresponding to the dimension, the first generation module is configured to:sort the attribute information vectors corresponding to the dimension based on the order of the plurality of call chains; and store the attribute information vectors corresponding to the dimension based on a column storage data structure and a sorting result to obtain an attribute information storage queue corresponding to the dimension.

In an altemative implementation, when filtering, based on the filtering dimension indicated by the topology generation instruction and the filtering range of attribute information in the filtering dimension, the target attribute information in the filtering dimension from the attribute information storage queues of the respective dimensions, the filtering module is configured to: filter, based on the filtering dimension, a target storage queue from the attribute information storage queues; and traverse respective attribute information vectors in the target storage queue to search the attribute information vectors for attribute information meeting the filtering range of attribute information and use the filtered attribute information as the target attribute information.

In an altemative implementation, when filtering, based on the filtering dimension indicated by the topology generation instruction and the filtering range of attribute information in the filtering dimension, the target attribute information in the filtering dimension from the attribute information storage queues of the respective dimensions, the filtering module is configured to: filter, based on the filtering dimension, a target storage queue from the attribute information storage queues; and traverse the target storage queue to search the target storage queue for attribute information meeting the filtering range of attribute information and use the filtered attribute information as the target attribute information.

In an altemative implementation, when generating the call topology corresponding to the topology generation instruction based on the call trace information corresponding to the filtered target attribute information, the second generation module is configured to: determine, based on the call trace information corresponding to the filtered target attribute information, a target call chain corresponding to the target attribute information; and generate, based on microservice calls corresponding to the target call chain, the call topology corresponding to the topology generation instruction.

In an alternative implementation, the dimension of the attribute information comprises at least one of: a call starting time, a call ending time, a call duration and call return information.

In a third aspect, the embodiments of the present disclosure further provide an electronic device, comprising: a processor, a memory and a bus, wherein the memory stores machine readable instructions executable by the processor, the processor and the memory communicate with each other via the bus when the electronic device is running, and the machine readable instructions, when executed by the processor, perform the steps of the first aspect, or any one of the possible implementations in the first aspect.

In a fourth aspect, the embodiments of the present disclosure further provide a computer readable storage medium having computer programs stored thereon, wherein the computer programs, when executed by a processor, perform the steps of the first aspect, or any one of the possible implementations in the first aspect.

In a fifth aspect, the embodiments of the present disclosure still further provide a computer program product having program code stored thereon, wherein instructions included in the program code are applicable to perform the steps of the first aspect, or any one of the possible implementations in the first aspect.

The method and apparatus of generating a call topology provided by the embodiments of the present disclosure can implement: obtaining call trace information respectively corresponding to a plurality of microservice calls, the call trace information comprising identification information of call chains to which the microservice calls belong, position information of each microservice call in a corresponding call chain and attribute information of the microservice calls in a plurality of dimensions; for attribute information in each dimension, generating an attribute information storage queue corresponding to the dimension based on the identification information corresponding to respective attribute information in the dimension and the position information; in response to a topology generation instruction, filtering, based on a filtering dimension and a filtering range of attribute information in the filtering dimension that are indicated by the topology generation instruction, target attribute information in the filtering dimension from attribute information storage queues of respective dimensions; and generating, based on call trace information corresponding to the filtered target attribute information, a call topology corresponding to the topology generation instruction. By generating an attribute information storage queue for each attribute information dimension of the microservice trace information, filtering the attribute information upon receiving a topology generation instruction, and generating a call topology using call trace information corresponding to the filtered target attribute information, the embodiments of the present disclosure can achieve dynamic filtering of topologies, to generate a call topology meeting the user's need and improve the availability of the topology.

In order to make the above objective, features and advantages of the present disclosure more apparent, description of optimal embodiments will be detailed below with reference to the drawings.

### BRIEF DESCRIPTION OF THE DRAWINGS

In order to describe more clearly the technical solution according to the embodiments of the present disclosure, brief description of the drawings required in the respective embodiments will be provided below, where the drawings, which are incorporated into the Description and constitute a part thereof, illustrate embodiments consistent with the present disclosure and are used, together with the Description, to explain the technical solution of the present disclosure. It would be appreciated that the drawings below only illustrate some embodiments and thus should not be construed as limiting the scope, on the basis of which the ordinary skilled in the art could derive other related drawings, without doing creative work.
Fig. 1 illustrates a flowchart of a method of generating a call topology provided by embodiments of the present disclosure;
Fig. 2 illustrates a schematic diagram of attribute information storage queues provided by embodiments of the present disclosure;
Fig. 3 illustrates a schematic diagram of an apparatus of generating a call topology provided by embodiments of the present disclosure; and
Fig. 4 illustrates a schematic diagram of an electronic device provided by embodiments of the present disclosure.

### DETAILED DESCRIPTION OF EMBODIMENTS

In order to make the objective, the technical solution and the advantages of the embodiments of the present disclosure more apparent, reference below will be made to the drawings of the embodiments of the present disclosure to describe clearly and completely the technical solution according to the embodiments of the present disclosure. Apparently, the embodiments described herein are only part of the embodiments of the present disclosure, rather than all of them. Components according to the embodiments of the present disclosure, as depicted and shown in the drawings, may be arranged and designed in various different configurations. Therefore, the description of the embodiments of the present disclosure detailed with reference to the drawings only involves selected embodiments of the present disclosure, without suggesting any limitation to the scope of the present disclosure. On the basis of the embodiments of the present disclosure, those skilled in the art could derive other embodiments, without doing creative work, which all fall into the protection scope of the present disclosure.

It is to be noted that similar references and alphabets represent similar terms in the drawings. Therefore, once a term is defined in one drawing, there is no need for further defining and explaining the same in the following drawings.

The term "and/or" is only used here to describe an association, indicating three possible relationships. For example, A and/or B may indicate: A exists alone, A and B exist simultaneously, or B exists alone. In addition, the term "at least one" used here indicates any one, or at least any two, of a plurality of combinations. For example, at least one of A, B and C may indicate any one or more elements selected from a set including A, B and C.

Through research, it is found that a call topology is typically generated by splicing call relationships between every two services, causing loss of link data and detail data. Once generated, the call topology cannot be adjusted (e.g. filtered, pruned, and the like) according to the users' needs, resulting in a low availability.

Based on the above-mentioned research, the present disclosure provides a method and an apparatus for generating a call topology. By generating an attribute information storage queue for each attribute information dimension of the microservice trace information, filtering the attribute information upon receiving a topology generation instruction, and generating a call topology using call trace information corresponding to the filtered target attribute information, the embodiments of the present disclosure can achieve dynamic filtering of topologies, to generate a call topology meeting the user's need and improve the availability of the topology.

For the sake of understanding of the embodiments, detailed description will be made to the method of generating the call topology according to embodiments of the present disclosure, where the method of generating the call topology may be performed by a computer device with a certain computing capability. In some possible implementations, the method of generating the call topology may be performed by a processor executing computer readable instructions stored in a memory.

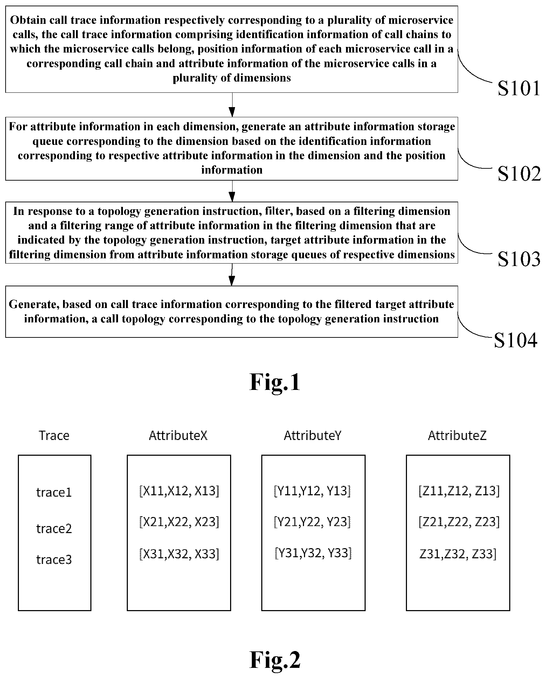

Fig. 1 illustrates a flowchart of a method of generating a call topology provided by embodiments of the present disclosure, the method including S101 through S104.

The method includes, at S101, obtaining call trace information respectively corresponding to a plurality of microservice calls, the call trace information comprising identification information of call chains to which the microservice calls belong, position information of each microservice call in a corresponding call chain and attribute information of the microservice calls in a plurality of dimensions.

The microservices are a set of small services into which a single application program is divided, where the services coordinate and cooperate with each other. Each service runs in an independent process. Services communicate with each other using a lightweight communication mechanism. A service node can send a call request to a further service node and obtain a call result returned by the further service node. This process may be called a microservice call. In the microservice framework, a request of a user may correspond to a call chain that may include a plurality of microservice calls, and the microservices may be traced to obtain call trace information.

The call chain of the microservice framework is a directed acyclic graph, where: a mciroservice call is initiated from a root service node, passes through a plurality of intermediate service nodes, and finally reaches a plurality of backend leaf nodes; a miroservice topology may be formed after performing call data aggregation processing multiple times.

The distributed call data may be obtained by a distributed tracing system. A trace is generated for each call chain, which is set with a corresponding unique identifier traceId, i.e., identification information of the call chain. A trace may include a plurality of call spans each representing a microservice call in the call process and containing attribute information in a plurality of dimensions, for example, a call starting time, a call ending time, a call duration, call return information and the like.

The call trace information includes identification information of call chains to which the microservice calls belong, position information of each microservice call in a corresponding call chain and attribute information of the microservice calls in a plurality of dimensions. Wherein, the position information of each microservice call in a corresponding call chain can indicate a ranking of the microservice in the corresponding call chain.

After obtained, the call trace information of the microservice calls may be aggregated in the following form:

```
    trace1:{
       span 1:{attribueX: X11, attribueY: Y11, attribueZ: Z11},
       span 2:{attribueX: X12, attribueY: Y12, attribueZ: Z12},
       span 3:{attribueX: X13, attribueY: Y13, attribueZ: Z13},
     },
    trace2:{
       span 1:{attribueX: X21, attribueY: Y21, attribueZ: Z21},
       span 2:{attribueX: X22, attribueY: Y22, attribueZ: Z22},
       span 3:{attribueX: X23, attribueY: Y23, attribueZ: Z23},
     },
    trace3:{
       span 1:{attribueX: X31, attribueY: Y31, attribueZ: Z31},
       span 2:{attribueX: X32, attribueY: Y32, attribueZ: Z32},
       span 3:{attribueX: X33, attribueY: Y33, attribueZ: Z33},
     }
```

wherein the position information may be recorded by sorting and identifying the microservice calls. For example, span 1 indicates that the position of the microservice call in the corresponding call chain is the first position.

The method further includes, at S102, for attribute information in each dimension, generating an attribute information storage queue corresponding to the dimension based on the identification information corresponding to respective attribute information in the dimension and the position information.

In this step, after obtaining the call trace information, attribute information storage queues of respective dimensions may be generated, to filter microservice calls according to the attribute information in different dimensions.

Specifically, for attribute information in each dimension, an order of microservice calls corresponding to the call chain may be determined based on the position information of the microservice calls in the call chain; then, the attribute information in respective dimensions corresponding to the call chain is sorted based on the order of microservice calls, and attribute information vectors of the respective dimensions are generated based on a sorting result (for example, in the above-mentioned trace 1, the attribute information vector of the span 1 in the AttributeX dimension may be [X11, X12, X13]. After obtaining the attribute information vector in each dimension, an attribute information storage queue corresponding to the dimension is generated based on the order of the respective call chains and the attribute information vector corresponding to the dimension.

Fig. 2 illustrates a schematic diagram of attribute information storage queues provided by the embodiments of the present disclosure, including attribute information storage queues in three dimensions AttributeX, AttributeY and attributeZ. In the attribute information storage queue in each dimension, the attribute information vectors are sorted according to the order of the call chains. There may be further provided a call chain information storage queue having stored therein identification information of respective call chains that is sorted according to the order of the call chains.

The attribute information storage queue may be of a column storage data structure. Based on the column storage data structure and the sorting result of the attribute information vectors, the attribute information storage queue corresponding to each dimension may be obtained.

The generated attribute information storage queue may be stored in the database. If a user needs to generate a call topology, the call topology may be generated using information stored in the attribute information storage queues.

The method further includes, at S103, in response to a topology generation instruction, filtering, based on a filtering dimension and a filtering range of attribute information in the filtering dimension that are indicated by the topology generation instruction, target attribute information in the filtering dimension from attribute information storage queues of respective dimensions.

In the step, the user can issue, via a client, a topology generation instruction that may carry filtering information including a filtering dimension and a filtering range of attribute information in the filtering dimension, where the filtering dimension may include a dimension of attribute information of a call request. Based on the filtering information, target attribute information meeting a filtering condition may be filtered from the attribute information storage queues.

By way of example, a target queue may be first filtered from the attribute information storage queues based on the filtering dimension indicated by the topology generation instruction. For example, if the filtering dimension is AttributeY, the attribute information storage queue corresponding to the AttributeY may be determined as the target storage queue.

Subsequently, the attribute information meeting the filtering range of attribute information may be obtained by searching the target storage queue, and the filtered attribute information may be used as the target attribute information.

Specifically, the respective attribute information vectors in the target storage queue may be traversed, to determine whether respective data in the attribute information vectors meet the filtering range of the attribute information; if yes, the data may be used as the target attribute information.

The method further includes, at S104, generating, based on call trace information corresponding to the filtered target attribute information, a call topology corresponding to the topology generation instruction.

After the target attribute information is determined, a target call train corresponding to the target attribute information is determined based on the call trace information corresponding to the filtered target attribute information. Specifically, the corresponding call trace information may be directly obtained from the attribute information storage queue, and the target call chain corresponding thereto may be determined based on the position information of the target attribute information in the attribute information storage queue.

After the target call chain is determined, the call topology may be generated using microservice calls corresponding to the target call chain, where the call topology may include a plurality of nodes representing respective microservice calls, and there are directed connection edges between the nodes, each indicating a sequential relationship between the microservice calls.

As such, the call topology generated with the above-mentioned method can meet the users' filtering needs. As compared to the method of directly generating a call topology, the embodiments of the present disclosure can store the attribute information of microservice calls in each dimension in the column storage manner, to facilitate filtering of the microservice calls according to the dimension of the attribute information. Since the attribute information of the microservice calls is stored, the user can perform filtering again after the call topology is generated, to generate a new call topology meeting the user's need. In this way, the present disclosure can achieve dynamic, real-time filtering and generation of a call topography that has a higher availability.

The method of generating the call topology provided by the embodiments of the present disclosure includes: obtaining call trace information respectively corresponding to a plurality of microservice calls, the call trace information comprising identification information of call chains to which the microservice calls belong, position information of each microservice call in a corresponding call chain and attribute information of the microservice calls in a plurality of dimensions; for attribute information in each dimension, generating an attribute information storage queue corresponding to the dimension based on the identification information corresponding to respective attribute information in the dimension and the position information; in response to a topology generation instruction, filtering, based on a filtering dimension and a filtering range of attribute information in the filtering dimension that are indicated by the topology generation instruction, target attribute information in the filtering dimension from attribute information storage queues of respective dimensions; and generating, based on call trace information corresponding to the filtered target attribute information, a call topology corresponding to the topology generation instruction. By generating an attribute information storage queue for each attribute information dimension of the microservice trace information, filtering the attribute information upon receiving a topology generation instruction, and generating a call topology using call trace information corresponding to the filtered target attribute information, the embodiments of the present disclosure can achieve dynamic filtering of topologies, to generate a call topology meeting the user's need and improve the availability of the topology.

It would be appreciated by those skilled in the art that, in the above method according to the implementations, the order of the respective steps, which is not a strict execution order, does not formulate any limitation to the implementation process, and the specific execution order of the respective steps should be determined depending on the functions and the possible internal logic thereof.

Based on the same invention conception, the embodiments of the present disclosure further provide an apparatus of generating a call topology corresponding to the method of generating a call topology. Since the apparatus according to the embodiments of the present disclosure is similar to the method described above in terms of the principle for solving the problem, see the implementation of the method for details which are omitted here for brevity.

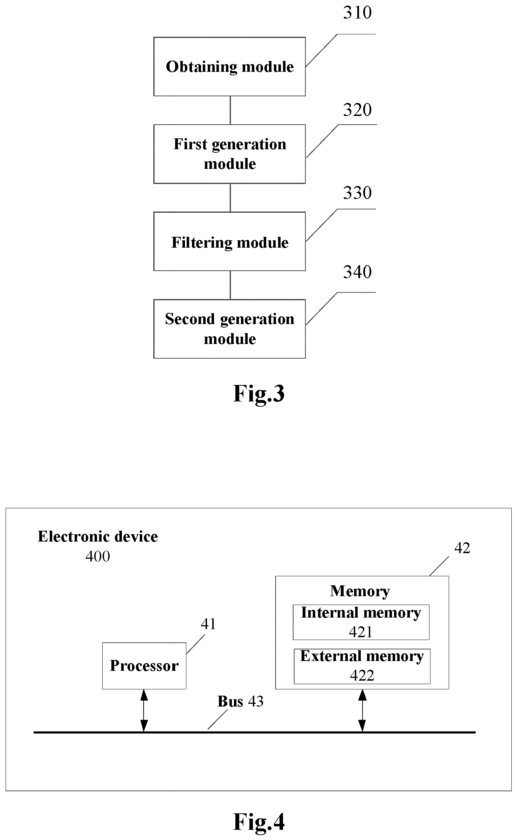

Fig. 3 illustrates a schematic diagram of a call topology generation apparatus provided by embodiments of the present disclosure. The apparatus includes:
an obtaining module 310 for obtaining call trace information respectively corresponding to a plurality of microservice calls, the call trace information comprising identification information of call chains to which the microservice calls belong, position information of each microservice call in a corresponding call chain and attribute information of the microservice calls in a plurality of dimensions;
a first generation module 320 for generating, for attribute information in each dimension, an attribute information storage queue corresponding to the dimension based on the identification information corresponding to respective attribute information in the dimension and the position information;
a filtering module 330 for, in response to a topology generation instruction, filtering, based on a filtering dimension and a filtering range of attribute information in the filtering dimension that are indicated by the topology generation instruction, target attribute information in the filtering dimension from attribute information storage queues of respective dimensions; and
a second generation module 340 for generating, based on call trace information corresponding to the filtered target attribute information, a call topology corresponding to the topology generation instruction.

The call topology generation apparatus provided by the embodiments of the present disclosure can implement: obtaining call trace information respectively corresponding to a plurality of microservice calls, the call trace information comprising identification information of call chains to which the microservice calls belong, position information of each microservice call in a corresponding call chain and attribute information of the microservice calls in a plurality of dimensions; for attribute information in each dimension, generating an attribute information storage queue corresponding to the dimension based on the identification information corresponding to respective attribute information in the dimension and the position information; in response to a topology generation instruction, filtering, based on a filtering dimension and a filtering range of attribute information in the filtering dimension that are indicated by the topology generation instruction, target attribute information in the filtering dimension from attribute information storage queues of respective dimensions; and generating, based on call trace information corresponding to the filtered target attribute information, a call topology corresponding to the topology generation instruction. By generating an attribute information storage queue for each attribute information dimension of the microservice trace information, filtering the attribute information upon receiving a topology generation instruction, and generating a call topology using call trace information corresponding to the target attribute information obtained by filtering, the embodiments of the present disclosure can achieve dynamic filtering of topologies, to generate a call topology meeting the user's need and improve the availability of the topology.

In an altemative implementation, when generating, for the attribute information in each dimension, the attribute information storage queue corresponding to the dimension based on the identification information corresponding to the respective attribute information in the dimension and the position information, the first generation module 320 is configured to: for each call chain indicated by the identification information, determine, based on the position information of the microservice calls in the call chain, a microservice call order corresponding to the call chain; sort the attribute information of respective dimensions corresponding to the call chain based on the microservice call order, and generate attribute information vectors of the respective dimensions based on a sorting result; and for an attribute information vector of each dimension, generate an attribute information storage queue corresponding to the dimension based on an order of the plurality of call chains and the attribute information vector corresponding to the dimension.

In an alternative implementation, when generating the attribute information storage queue corresponding to the dimension based on the order of the plurality of the call chains and the attribute information vector corresponding to the dimension, the first generation module 320 is configured to: sort the attribute information vectors corresponding to the dimension based on the order of the plurality of call chains; and store the attribute information vectors corresponding to the dimension based on a column storage data structure and a sorting result to obtain an attribute information storage queue corresponding to the dimension.

In an altemative implementation, when filtering, based on the filtering dimension indicated by the topology generation instruction and the filtering range of attribute information in the filtering dimension, the target attribute information in the filtering dimension from the attribute information storage queues of the respective dimensions, the filtering module 330 is configured to: filter, based on the filtering dimension, a target storage queue from the attribute information storage queues; and traverse respective attribute information vectors in the target storage queue to search the attribute information vectors for attribute information meeting the filtering range of attribute information and use the filtered attribute information as the target attribute information.

In an altemative implementation, when filtering, based on the filtering dimension indicated by the topology generation instruction and the filtering range of attribute information in the filtering dimension, the target attribute information in the filtering dimension from the attribute information storage queues of the respective dimensions, the filtering module 330 is configured to: filter, based on the filtering dimension, a target storage queue from the attribute information storage queues; and traverse the target storage queue to search the target storage queue for attribute information meeting the filtering range of attribute information and use the filtered attribute information as the target attribute information.

In an altemative implementation, when generating the call topology corresponding to the topology generation instruction based on the call trace information corresponding to the filtered target attribute information, the second generation module 340 is configured to: determine, based on the call trace information corresponding to the filtered target attribute information, a target call chain corresponding to the target attribute information; and generate, based on microservice calls corresponding to the target call chain, the call topology corresponding to the topology generation instruction.

In an alternative implementation, the dimension of the attribute information comprises at least one of: a call starting time, a call ending time, a call duration and call return information.

For the processing flow of respective modules in the apparatus, and the interaction between the respective modules, see the related description in the method embodiments for details which are omitted here for brevity.

Corresponding to the method of generating a call topology in Fig. 1, the embodiments of the present disclosure further provide an electronic device 400. Fig. 4 illustrates a schematic diagram of a structure of the electronic device 400 provided by the embodiments of the present disclosure, including: a processor 41, a memory 42 and a bus 43, where the memory 42 is configured to store executable instructions and includes an internal memory 421 and an external memory 422. The internal memory 421 may also be referred to as internal storage unit for temporarily storing operation data in the processor 41 and data to be exchanged with the external memory 422 such as a hard disk or the like. The processor 41 can exchange data with the external memory 422 via the internal memory 421. When the electronic device 400 is running, the processor 41 and the memory 42 communicate with each other via the bus 43, to cause the processor to execute instructions of: obtaining call trace information respectively corresponding to a plurality of microservice calls, the call trace information comprising identification information of call chains to which the microservice calls belong, position information of each microservice call in a corresponding call chain and attribute information of the microservice calls in a plurality of dimensions; for attribute information in each dimension, generating an attribute information storage queue corresponding to the dimension based on the identification information corresponding to respective attribute information in the dimension and the position information; in response to a topology generation instruction, filtering, based on a filtering dimension and a filtering range of attribute information in the filtering dimension that are indicated by the topology generation instruction, target attribute information in the filtering dimension from attribute information storage queues of respective dimensions; and generating, based on call trace information corresponding to the filtered target attribute information, a call topology corresponding to the topology generation instruction.

In an altemative implementation, in the instructions executed by the processor 41, for the attribute information in each dimension, generating the attribute information storage queue corresponding to the dimension based on the identification information corresponding to the respective attribute information in the dimension and the position information, comprises: for each call chain indicated by the identification information, determining, based on the position information of the microservice calls in the call chain, a microservice call order corresponding to the call chain; sorting the attribute information of respective dimensions corresponding to the call chain based on the microservice call order, and generating attribute information vectors of the respective dimensions based on a sorting result; and for an attribute information vector of each dimension, generating an attribute information storage queue corresponding to the dimension based on an order of the plurality of call chains and the attribute information vector corresponding to the dimension.

In an alternative implementation, in the instructions executed by the processor 41, generating the attribute information storage queue corresponding to the dimension based on the order of the plurality of the call chains and the attribute information vector corresponding to the dimension comprises: sorting the attribute information vectors corresponding to the dimension based on the order of the plurality of call chains; and storing the attribute information vectors corresponding to the dimension based on a column storage data structure and a sorting result to obtain an attribute information storage queue corresponding to the dimension.

In an alternative implementation, in the instructions executed by the processor 41, filtering, based on the filtering dimension indicated by the topology generation instruction and the filtering range of attribute information in the filtering dimension, the target attribute information in the filtering dimension from the attribute information storage queues of the respective dimensions comprises: filtering, based on the filtering dimension, a target storage queue from the attribute information storage queues; and traversing respective attribute information vectors in the target storage queue to search the attribute information vectors for attribute information meeting the filtering range of attribute information and use the filtered attribute information as the target attribute information.

In an alternative implementation, in the instructions executed by the processor 41, filtering, based on the filtering dimension indicated by the topology generation instruction and the filtering range of attribute information in the filtering dimension, the target attribute information in the filtering dimension from the attribute information storage queues of the respective dimensions comprises: filtering, based on the filtering dimension, a target storage queue from the attribute information storage queues; and traversing the target storage queue to search the target storage queue for attribute information meeting the filtering range of attribute information and use the filtered attribute information as the target attribute information.

In an alternative implementation, in the instructions executed by the processor 41, generating the call topology corresponding to the topology generation instruction based on the call trace information corresponding to the filtered target attribute information comprises: determining, based on the call trace information corresponding to the filtered target attribute information, a target call chain corresponding to the target attribute information; and generating, based on microservice calls corresponding to the target call chain, the call topology corresponding to the topology generation instruction.

In an alternative implementation, in the instructions executed by the processor 41, the dimension of the attribute information comprises at least one of: a call starting time, a call ending time, a call duration and call return information.

The embodiments of the present disclosure further provide a computer readable storage programs stored thereon, where the computer programs, when executed by a processor, perform the steps of the call topology generation method according to the method embodiments described above. Wherein, the storage medium may be a transitory or non-transitory computer readable storage medium.

The embodiments of the present disclosure still further provide a computer program product having program code carried thereon, where the instructions included in the program code may be used to perform steps of the call topology generation method according to the method embodiments described above. See the method embodiments described above for details which are omitted here for brevity.

The computer program product may be implemented by hardware, software or a combination thereof. In an alternative embodiment, the computer program product is instantiated as a computer storage medium. In a further alternative embodiment, the computer program product is instantiated as a software product, for example, a Software Development Kit (SDK) and the like.

As would be fully understood by those skilled in the art, reference could be made to the corresponding process described in the above method embodiments for details of the specific operation process of the system and apparatus, which are omitted here for ease and brevity of the description. In some embodiments provided by the present disclosure, it would be appreciated that the system, apparatus and method disclosed herein could be implemented in other fashion. The apparatus embodiments described above are provided only exemplarily. For example, the division of the units is only a logical function division, which may be a further type of division when implemented in practice. For another example, a plurality of units or components may be combined or may be integrated in a further system, or some features may be omitted or may not be executed. In addition, coupling or direct coupling, or a communication connection, between the components shown or discussed may be implemented via some communication interfaces, and indirect coupling, or a communication connection, may be in an electrical or mechanical form, or other form.

The units described as separate components may, or may not, be physically separated, and components displayed as units may, or may not, be physical units (i.e., they may be located on the same site, or may be distributed over a plurality of network units). Some or all of the units may be chosen, as actually required, to accomplish the objective of the solution according to the embodiments.

In addition, the respective functional units in the embodiments of the present disclosure may be integrated in a processing unit, or the respective units may exist physically separately, or two or more units may be integrated in one unit.

If implemented in the form of software functional units and sold or used as a stand-alone product, the functions could be stored in a non-transitory computer readable storage medium executable by a processor. According to this understanding, the substance of the technical solution according to the present disclosure, or the part thereof making contribution over the prior art or parts of the technical solution, may be embodied in the form of software product, where the computer software product is stored in a storage medium and includes a plurality of instructions to cause a computer device (which may be a personal computer, server, network device, or the like) to perform all or a part of steps of the method according to the embodiments of the present disclosure. The storage medium as described above includes: a U disk, a mobile hard disk, a Read-Only Memory (ROM), a Random Access Memory (RAM), a magnetic or optical disk, and other medium that can store program code.

It should be noted that the above embodiments, only as specific implementations of the present disclosure, are employed to describe the technical solution of the present disclosure, rather than limit the latter, and the protection scope of the present disclosure is not limited thereto. Although the present disclosure has been detailed with reference to the above embodiments, the ordinary skilled in the art would understand that, within the technical range disclosed herein, any one skilled in the art is still allowed to modify the technical solution as recited in the above embodiments, or may easily envision changing the technical solution or making equivalent substitutions for some technical features therein. However, those modifications, changes or substitutions do not cause the substance of the corresponding technical solution to depart from the spirits or scope of the technical solution according to the embodiments of the present disclosure, and should all be covered in the protection scope of the present disclosure. Therefore, the protection scope of the present disclosure should be determined depending on the appended claims.

## Claims

1. A method of generating a call topology, comprising:
obtaining call tracking information respectively corresponding to a plurality of microservice calls, the call tracking information comprising identification information of call chains to which the microservice calls belong, position information of each microservice call in a corresponding call chain, and attribute information of the microservice calls in a plurality of dimensions;
for attribute information in each dimension, generating, based on the identification information corresponding to respective attribute information in the dimension and the position information, an attribute information storage queue corresponding to the dimension;
in response to a topology generation instruction, filtering, based on a filtering dimension and a filtering range of attribute information in the filtering dimension that are indicated by the topology generation instruction, target attribute information in the filtering dimension from attribute information storage queues of respective dimensions; and
generating, based on call tracking information corresponding to the filtered target attribute information, a call topology corresponding to the topology generation instruction.

2. The method of claim 1, wherein for the attribute information in each dimension, generating, based on the identification information corresponding to the respective attribute information in the dimension and the position information, the attribute information storage queue corresponding to the dimension, comprises:
for each call chain indicated by the identification information, determining, based on the position information of the microservice calls in the call chain, a microservice call order corresponding to the call chain;
sorting, based on the microservice call order, the attribute information of respective dimensions corresponding to the call chain, and generating, based on a sorting result, attribute information vectors of the respective dimensions; and
for an attribute information vector of each dimension, generating, based on an order of the plurality of call chains and the attribute information vector corresponding to the dimension, an attribute information storage queue corresponding to the dimension.

3. The method of claim 2, wherein generating, based on the order of the plurality of the call chains and the attribute information vector corresponding to the dimension, the attribute information storage queue corresponding to the dimension, comprises:
sorting, based on the order of the plurality of call chains, the attribute information vectors corresponding to the dimension; and
storing, based on a column storage data structure and a sorting result, the attribute information vectors corresponding to the dimension to obtain an attribute information storage queue corresponding to the dimension.

4. The method of claim 3, wherein filtering, based on the filtering dimension indicated by the topology generation instruction and the filtering range of attribute information in the filtering dimension, the target attribute information in the filtering dimension from the attribute information storage queues of the respective dimensions, comprises:
filtering, based on the filtering dimension, a target storage queue from the attribute information storage queues; and
traversing respective attribute information vectors in the target storage queue to search the attribute information vectors for attribute information meeting the filtering range of attribute information and use the filtered attribute information as the target attribute information.

5. The method of claim 1, wherein filtering, based on the filtering dimension indicated by the topology generation instruction and the filtering range of attribute information in the filtering dimension, the target attribute information in the filtering dimension from the attribute information storage queues of the respective dimensions, comprises:
filtering, based on the filtering dimension, a target storage queue from the attribute information storage queues; and
traversing the target storage queue to search the target storage queue for attribute information meeting the filtering range of attribute information and use the filtered attribute information as the target attribute information.

6. The method of claim 1, wherein generating, based on the call tracking information corresponding to the filtered target attribute information, the call topology corresponding to the topology generation instruction, comprises:
determining, based on the call tracking information corresponding to the filtered target attribute information, a target call chain corresponding to the target attribute information; and
generating, based on microservice calls corresponding to the target call chain, the call topology corresponding to the topology generation instruction.

7. The method of claim 1, wherein the dimension of the attribute information comprises at least one of:
a call starting time, a call ending time, a call duration, and call return information.

8. An apparatus for generating a call topology, comprising:
an obtaining module for obtaining call tracking information respectively corresponding to a plurality of microservice calls, the call tracking information comprising identification information of call chains to which the microservice calls belong, position information of each microservice call in a corresponding call chain, and attribute information of the microservice calls in a plurality of dimensions;
a first generation module for generating, for attribute information in each dimension and based on the identification information corresponding to respective attribute information in the dimension and the position information, an attribute information storage queue corresponding to the dimension;
a filtering module for, in response to a topology generation instruction, filtering, based on a filtering dimension and a filtering range of attribute information in the filtering dimension that are indicated by the topology generation instruction, target attribute information in the filtering dimension from attribute information storage queues of respective dimensions; and
a second generation module for generating, based on call tracking information corresponding to the filtered target attribute information, a call topology corresponding to the topology generation instruction.

9. An electronic device, comprising: a processor, a memory, and a bus, wherein the memory stores machine readable instructions executable by the processor, the processor and the memory communicate with each other via the bus when the electronic device is running, and the machine readable instructions, when executed by the processor, perform the method of any of claims 1-7.

10. A computer readable storage medium having computer programs stored thereon, wherein the computer programs, when executed by a processor, perform the method of any of claims 1-7.

11. A computer program product having program code stored thereon, wherein instructions included in the program code are applicable to perform the method of any of claims 1-7.
